# EUROPEAN PATENT SPECIFICATION

(11) **EP 2 846 756 B1**
(45) Date of publication and mention of the grant of the patent: **04.05.2016**
(21) Application number: 13730339.2
(22) Date of filing: 07.05.2013
(51) Int. Cl.: A61J 3/07

(54) **APPARATUS FOR FEEDING CAPSULES**
VORRICHTUNG ZUM BEFÜLLEN VON KAPSELN
DISPOSITIF POUR LE REMPLISSAGE DE CAPSULES

(30) Priority: 08.05.2012 IT BO20120249
(43) Date of publication of application: 18.03.2015
(73) Proprietor: I.M.A. Industria Macchine Automatiche S.p.A., 40064 Ozzano dell'Emilia (BO) (IT)
(72) Inventor: TREBBI, Roberto, I-40055 Castenaso (Bologna) (IT); CONSOLI, Fabrizio Salvatore, I-40127 Bologna (IT); RIBANI, Massimo, I-40068 San Lazzaro di Savena (Bologna) (IT)
(74) Representative: Persi, Patrizia
(86) International application number: PCT/IB2013/053651
(87) International publication number: WO 2013/168086

(56) References cited:
- EP-B1- 1 148 861
- NL-A- 8 401 800
- US-A1- 2011 146 843

## Description

The present invention relates to automatic machines for packaging pharmaceutical products. In particular, the invention refers to an apparatus for feeding capsules to a filling machine.

Various types of filling machines exist that are suitable for filling capsules, in particular capsules of the lid-bottom type that are made of hard gelatine, with liquid, powder, pill, mini-pill, chronoid etc. pharmaceutical products.

Filling machines are known comprising a turret or transferring wheel, rotating around a vertical axis and provided with housings or seats arranged for receiving the capsules, and a plurality of operating stations arranged around the aforesaid transferring wheel. During rotation, the transferring wheel moves the capsules, typically with an intermittent alternating motion, through the aforesaid operating stations that typically comprise a feeding station, one or more dosing stations and a capsule closing station.

In the feeding station a feeding apparatus is provided that draws empty capsules from a store and, after orienting the empty capsules correctly, inserts the empty capsules into the seats of the transferring wheel. Suitable means opens the capsules, separating the lids from the bottoms.

One or more dosing stations dose respective products into the bottoms of the capsules.

In the closing station, the lids are again coupled with the respective bottoms so as to close and recompose the dosed capsules, which are conveyed outside the filling machine.

The feeding apparatus of the feeding station comprises a plurality of parallel, suhstantially vertical feeding conduits that are able to draw the capsules from a store or upper hopper, where they lie loose, and convey the capsules to the seats of the transferring wheel. Each conduit enables a plurality of capsules arranged aligned according to the axis of greater length and in a single row to drop through by the force of gravity.

Orienting means is associated with each feeding conduit to orient the capsules correctly and insert the capsules singularly into the seats of the transferring wheel. In particular, the capsules are oriented in such a manner as to be inserted into the seats with the lid at the top and the bottom at the lower part.

The feeding conduits are equal in number to the number of seats on the transferring wheel. The seats are generally arranged next to one another to form a linear or arched row.

In order to increase the productivity of the filling machine, the seats for the capsules made on the transferring wheel can be arranged next to one another on two or more parallel or adjacent rows. Each row of seats is fed with the capsules by a respective feeding station. These filling machines thus comprise a plurality of feeding stations, arranged in sequence around the transferring wheel. These machines are thus particularly bulky and costly.

In order to overcome this drawback, feeding apparatuses arc known comprising a plurality of feeding conduits arranged next to one another according to two adjacent lines or groups so as to feed to two distinct rows or groups of scats of the transferring wheel in the same operating station. In this manner, the filling machine is relatively compact, having only one feeding station, which is slightly greater than a station with a single aligned group of feeding conduits. An apparatus of this type is illustrated in the document US 2011/0146843.

One drawback of this apparatus lies in the complexity and cost of the orienting means provided for orienting and inserting into the seats two rows of capsules that are alongside one another.

One object of the present invention is to improve the known apparatuses for feeding capsules, or similar elements, to filling machines provided with a transferring wheel with seats for the capsules.

Another object is to provide a feeding apparatus that is compact and not bulky that is able to feed a high-production filling machine provided with a transferring wheel having seats for the capsules arranged alongside one another in two adjacent rows.

A further object is to make a feeding apparatus that has simple and reliable operation. These objects and still others are achieved by a feeding apparatus according to any one of the claims set out below.

The invention can be better understood and implemented with reference to the attached drawings that illustrate some embodiments thereof by way of non-limiting example, in which:

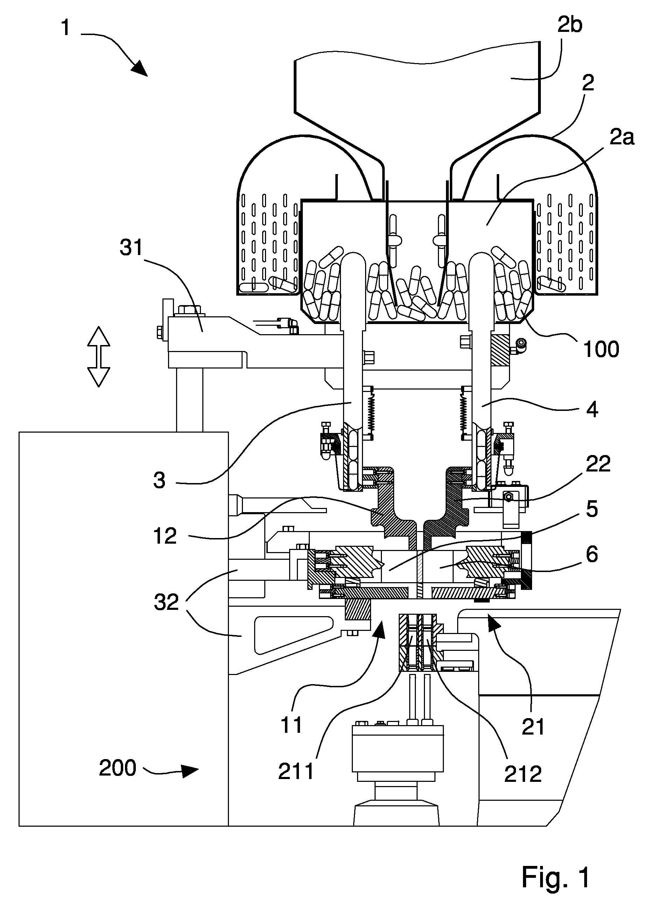

- figure 1 is a frontal schematic and partially sectioned view of the capsule-feeding apparatus of the invention associated with a partially illustrated filling machine;
- figure 2 is a partial and enlarged front view of the apparatus in figure 1;
- figure 3 is a section according to line III-III in figure 2;
- figure 4 is a frontal schematic and partially sectioned view of the feeding apparatus in a second operating configuration;

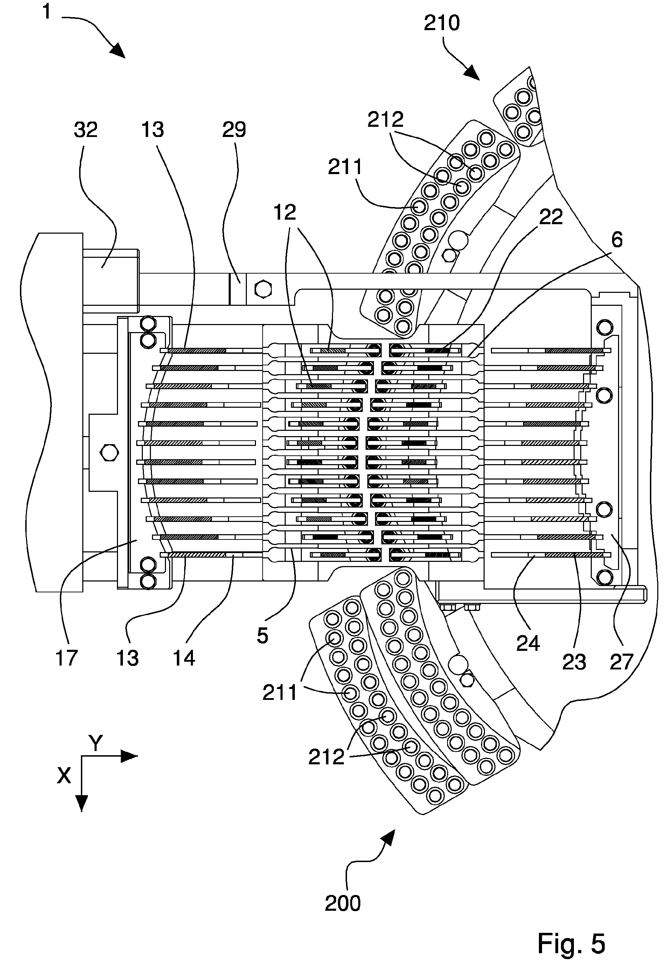

- figure 5 is a section according to line V-V in figure 4;
- figures 6 to 9 are partially sectioned and enlarged partial front views of the apparatus of the invention in successive operating configurations.

With reference to the figures, the apparatus 1 of the invention is illustrated arranged for feeding capsules 100 to a transferring wheel 210 of a filling machine 200, which is partially illustrated. The capsules 100 are made of hard gelatine. Each capsule 100 is made up of a bottom 100b closed above by a lid 100a so as to form a closed cavity that is suitable for containing one or more products.

The filling machine 200, of known type, comprises one or more filling stations for dosing one or more products, in particular pharmaceuticals, in the capsules 100. The feeding apparatus 1 is comprised in a feeding station of the filling machine.

The apparatus 1 comprising a store 2 for containing the capsules 100 and provided, in particular, with a tank 2a fed by an upper hopper 2b.

The apparatus comprises a plurality of first feeding conduits 3 that are parallel and spaced apart along a first direction X and are able to draw the capsules 100 from the store 2 and convey the capsules 100 to first seats 211 of the transferring wheel 210, and a plurality of second feeding conduits 4 that are parallel and spaced apart along the first direction X and able to draw the capsules 100 from the store 2 and convey the capsules 100 to second seats 212 of the transferring wheel 210.

The second feeding conduits 4 are spaced away from the first feeding conduits 3 along a second direction Y that is suhstantially orthogonal to the first direction X. The feeding conduits 3, 4 feed the capsules 100 to the filling machine 200 in parallel.

In the embodiment illustrated in the figures, the apparatus comprises twelve first feeding conduits 3 and twelve second feeding conduits 4 arranged along respective arched rows.

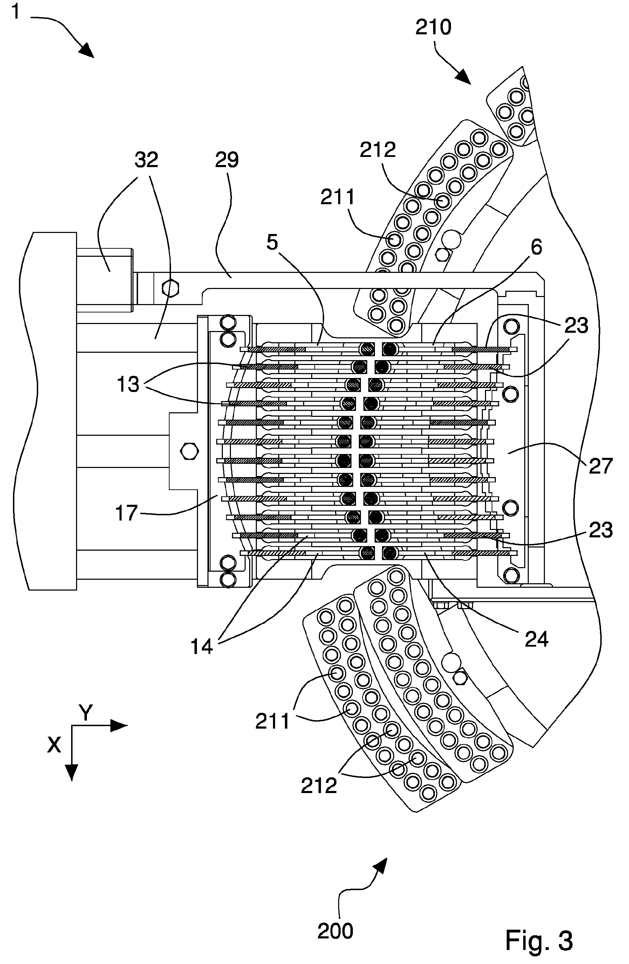

Similarly, as illustrated in particular in figure 3, the transferring wheel 210 of the machine comprises a plurality of peripheral sectors, each of which is provided with a first group of first seats 211 and a second group of second seats 212. The seats of each group are arranged along respective arched rows.

The first feeding conduits 3 and the second feeding conduits 4 extend along a third direction Z, substantially vertical and orthogonal to the first direction X and to the second direction Y, and are moved with an alternating motion along said third direction Z by first actuating means 31, so as to draw the capsules 100 from the store 2.

Each feeding conduit 3, 4 is able to receive a plurality of capsules 100 from the store 2 and convey said plurality of capsules 100 to the transferring wheel 210, the capsules 100 being arranged aligned along a longitudinal axis of greater length, the ones in contact with the others to form a single row. The capsules 100 are inserted into the conduits 3, 4 with a random orientation, i.e. with the bottoms 100b facing downwards (as requested for inserting into the seats 211, 212 of the transferring wheel 210) or upwards.

First stopping means 7 and second stopping means 8 are provided at the free ends of the first feeding conduits 3 and of the second feeding conduits 4 (opposite the ends inserted into the store 2) to stop or enable the descent of the capsules 100 along and outside the aforesaid feeding conduits 3, 4.

The apparatus 1 also includes first horizontal pushing means 11 and first vertical pushing means 12 that are movable and are arranged for receiving and orienting the capsules 100 coming from the first feeding conduits 3, and second horizontal pushing means 21 and second vertical pushing means 22 that are movable and arranged for receiving and orienting the capsules 100 coming from the second feeding conduits 4.

The first pushing means 11, 12 and the second pushing means 21, 22 enable, as explained better further on in the description, the capsules 100 to be oriented in an insertion configuration, i.e. in a substantially vertical position and in such a manner as to have the respective bottoms 100b facing downwards, i.e. to the seats 211, 212 of the transferring wheel 210.

The first horizontal pushers 11 and the second horizontal pushing means 21 face one another, opposite and movable with alternating motion in opposite directions along the second direction Y so as to orient, move near and insert (in cooperation with the first vertical pushers 12 and the second vertical pushers 22) the capsules 100 coming from the first feeding conduits 3 and the capsules 100 coming from the second feeding conduits 4 respectively into the first seats 211 and into the second seats 212.

The first vertical pushing means 21 and the second vertical pushing means 22 are arranged alongside one another, substantially parallel and movable with alternating motion along the third direction Z. In particular, the first vertical pushing means 12 is fixed to the first feeding conduits 3 and the second vertical pushing means 22 is fixed to the second feeding conduits 4.

In this manner, the first actuating means 31 moves both the feeding conduits 3, 4 and the vertical pushing means 12, 22 with alternating motion along the third, substantially vertical, direction Z.

The apparatus 1 further comprises first orienting conduits 5, arranged alongside one another and parallel along the first direction X and interposed between the first feeding conduits 3 and the first seats 211 and second orienting conduits 6 arranged alongside one another and parallel along the first direction X and interposed between the second feeding conduits 3 and the second seats 212.

The first orienting conduits 5 and the second orienting conduits 6 receive the capsules 100 respectively from the first feeding conduits 3 and from the second feeding conduits 4. The number of first orienting conduits 5 and of second orienting conduits 6 is thus equal respectively to the number of first feeding conduits 3 and of second feeding conduits 4 (twelve). Each orienting conduit 5, 6 is dimensioned along the first direction X (width) in such a manner as to retain the capsules 100 by interference fit with the respective lids 100a. In other words, the width of the orienting conduit 5, 6 is slightly less than the width of the lid 100a of the capsule 100, which in the absence of external forces thus remains locked inside the orienting conduit. Nevertheless, owing to the slight interference and elasticity of the material (hard gelatine) with which the capsule is made, the capsule can be rotated and moved inside the orienting conduit 5, 6, pushed by the pushing means as explained better below. The dimension according to the third direction Z (length) of each orienting conduit 5, 6 is such as to enable the capsule 100 to rotate once completely.

The first horizontal pushing means 11 and the first vertical pushing means 12 are movable inside the first orienting conduits 5, whereas the second horizontal pushing means 21 and the second vertical pushing means 22 are movable inside the second guide conduits 6.

The first horizontal pushing means 11 and the first vertical pushing means 12 comprise respectively first abutting means 13 and further first abutting means 15 arranged for pushing and rotating the capsules 100 coming from the first feeding conduits 3 in the desired insertion configuration.

Similarly, the second horizontal pushing means 21 and the second vertical pushing means 22 respectively comprise second abutting means 23 and further second abutting means 25 that are able to push and rotate the capsules 100, coming from the second feeding conduits 4, in the desired insertion configuration.

The first horizontal pushing means 11 and the second horizontal pushing means 21 also comprise respectively third abutting means 14 and fourth abutting means 24 for pushing along the second direction Y the capsules 100 that come from the first feeding conduits 3 and are correctly oriented by the first abutting means 13, 15, and moving these capsules 100 near the capsules 100 that come from the second feeding conduits 4 and are correctly oriented by the second abutting means 23, 25, such as to align the capsules 100 on the first seats 211 and on the second seats 212, respectively.

The third abutting means 14 and fourth abutting means 24 thus allow to move close the capsules that are fed and oriented in parallel in such a manner that they can be inserted with precision into the seats 211, 212 of the transferring wheel 210.

The first vertical pushing means 12 and the second vertical pushing means 22 respectively comprise further third abutting means 16 and further fourth abutting means 26 that are able to push the capsules 100 moved close by the third abutting means 14 and by the fourth abutting means 24 inside the first seats 211 and the second seats 212, respectively. Second actuating means 32 is provided for moving the first horizontal pushing means 11 and the second horizontal pushing means 21 along the second direction Y on a plane that is substantially horizontal with alternating motion and with opposite directions.

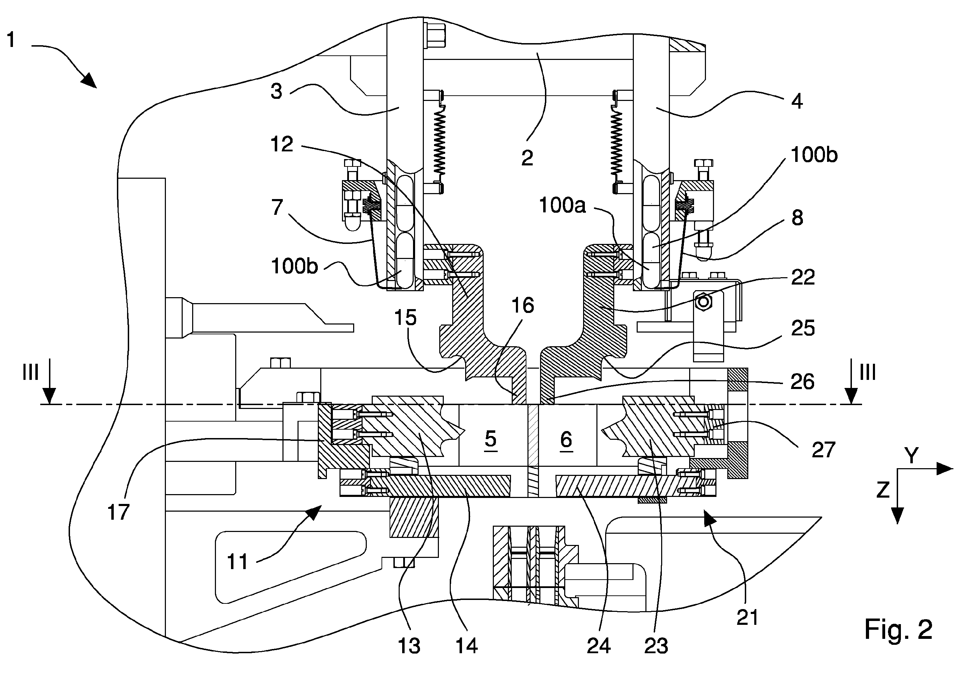

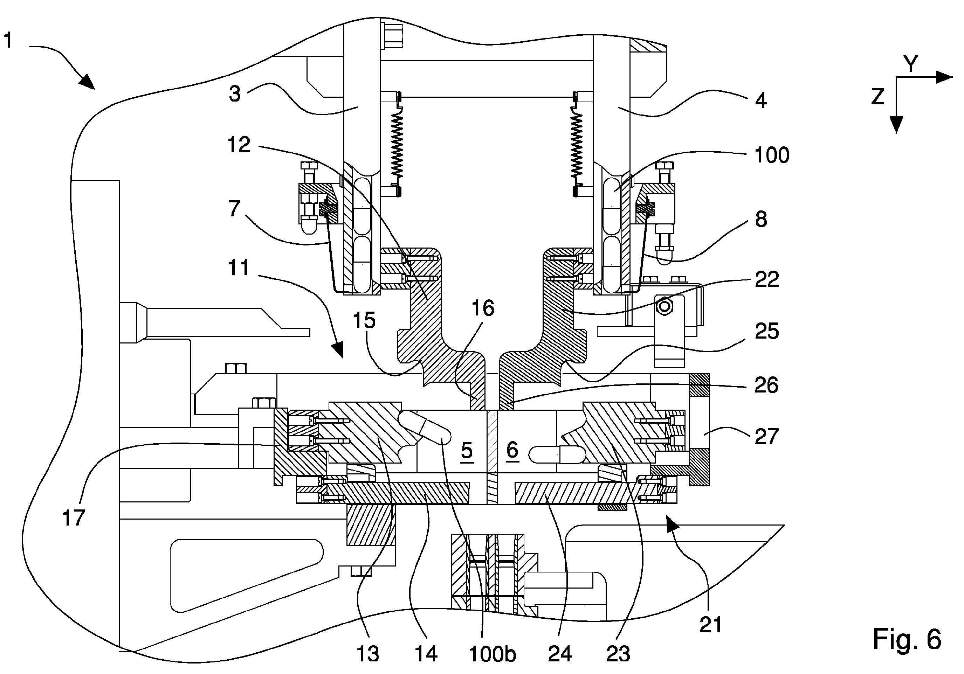

With particular reference to figures 2 and 3, the first horizontal pushing means 11 comprises a first supporting element 17 connected to the second actuating means 32 and supporting the first abutting means 13 and the third abutting means 14. The first abutting means comprises a plurality of first abutting elements 13, of the same number as the number of the first orienting conduits 5 and arranged for sliding inside the latter along the second direction Y in such a manner as to push and rotate respective capsules 100. In particular, each first abutting element 13 comprises a shaped end that is able to rotate a capsule 100 descending from the respective first feeding conduit 3 in a suhstantially horizontal position, with the bottom 100b facing the opposite second horizontal pushing means 21 (see fig. 6). The capsule 100 is rotated because it is retained by interference, at the lid 100a, by the opposite side walls of the first orienting conduit 5 in which it has been deposited by the corresponding first feeding conduit 3.

The third abutting means comprises a plurality of third abutting elements 14, of the same number as the number of the first orienting conduits 5 and arranged for sliding inside the latter along the second direction Y so as to push respective capsules 100 arranged vertically and in the insertion configuration, towards the opposite second horizontal pushing means 21, in such a manner as to align the capsules 100 with the underlying first seats 211.

The first vertical pushing means comprises a plurality of first pushing elements 12 that are connected to, and of the same number as, respective first feeding conduits 3 and are able to slide inside the respective first orienting conduits 5.

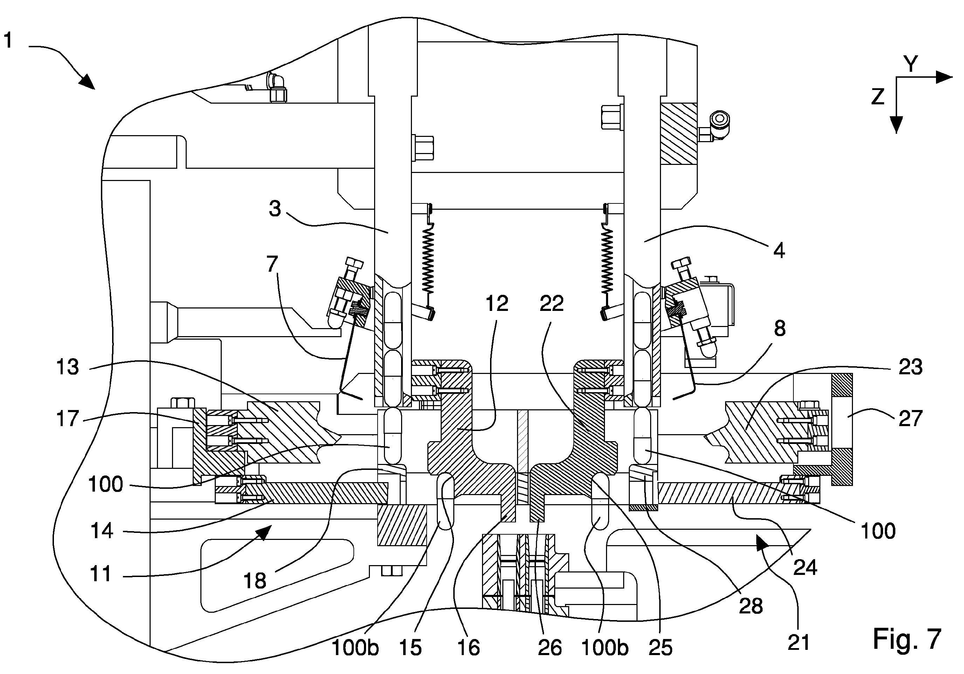

The further first abutting means of the first vertical pushing means 12 comprises a first abutting portion 15 made on each first pushing element 12 and shaped in such a manner as to rotate a capsule 100, which is arranged in a substantially horizontal position by the corresponding first abutting element 13, in a substantially vertical position, with the bottom 100b facing the first seats 211 i.e. in the insertion configuration (see fig. 7).

The further third abutting means of the first vertical pushing means 12 comprises a third abutting portion 16 made on each first pushing element 12 and arranged for pushing a capsule 100 arranged vertically and in the insertion configuration along the third direction Z inside the respective first scat 211.

The second horizontal pushing means 21 comprises a second supporting element 27 connected by a connecting arm 29 to the second actuating means 32 and supporting the second abutting means 23 and the fourth abutting means 24. The second abutting means comprises a plurality of second abutting elements 23, of the same number as the number of second orienting conduits 6 and arranged for sliding inside the latter along the second direction Y in such a manner as to push and rotate respective capsules 100. In particular, each second abutting element 23 comprises a shaped end that is able to rotate a capsule 100 descending from the respective second feeding conduit 4 in a substantially horizontal position, with the bottom 100b facing the opposite first horizontal pushing means 11 (see fig. 6). The capsule 100 is rotated because it is retained by interference, at the lid 100a, by the opposite side walls of the second orienting conduit 6 in which the capsule 100 has been deposited by the corresponding second feeding conduit 4.

The fourth abutting means comprises a plurality of fourth abutting elements 24, of the same number as the number of the second orienting conduits 6 and arranged for sliding inside the latter along the second direction Y in such a manner as to push respective capsules 100, arranged vertically and in the insertion configuration, to the opposite first horizontal pushing means 11 in such a manner as to align the capsules 100 with the underlying second seats 212.

The second vertical pushing means comprises a plurality of second pushing elements 22 connected to, and of the same number as, respective second feeding conduits 4 and able to slide inside the respective second orienting conduits 6.

The further second abutting means of the second vertical pushing means 22 comprises a second abutting portion 25 made on each second pushing element 22 and shaped in such a manner as to rotate a capsule 100, which is arranged in a substantially horizontal position by the corresponding second abutting element 23, in a substantially vertical position, with the bottom 100b facing the first seats 211 i.e. in the insertion configuration.

The further fourth abutting means of the second vertical pushing means 22 comprises a fourth abutting portion 26 made on each second pushing element 22 and arranged for pushing a capsule 100 arranged vertically and in the insertion configuration along the third direction Z inside the respective second seat 212.

It should be pointed out that the first abutting elements 13 and the third abutting elements 14 of the first horizontal pushing means 11 are respectively identical to the second abutting elements 23 and to the fourth abutting means 24 of the second horizontal pushing means 21.

Similarly, the first pushing elements 12 of the first vertical pushing means are identical to the second pushing elements 22 of the second vertical pushing means.

The first feeding conduits 3 and the respective first stopping means 7 are respectively identical to the second feeding conduits 4 and to the second stopping means 8.

The feeding apparatus 1 of the invention, in addition to having a simple and compact structure, thus enables substantially the same items to be used to feed two distinct groups of seats (first seats 211 and second seats 212) of the transferring wheel 210. The apparatus of the invention is thus not very expensive and is economical.

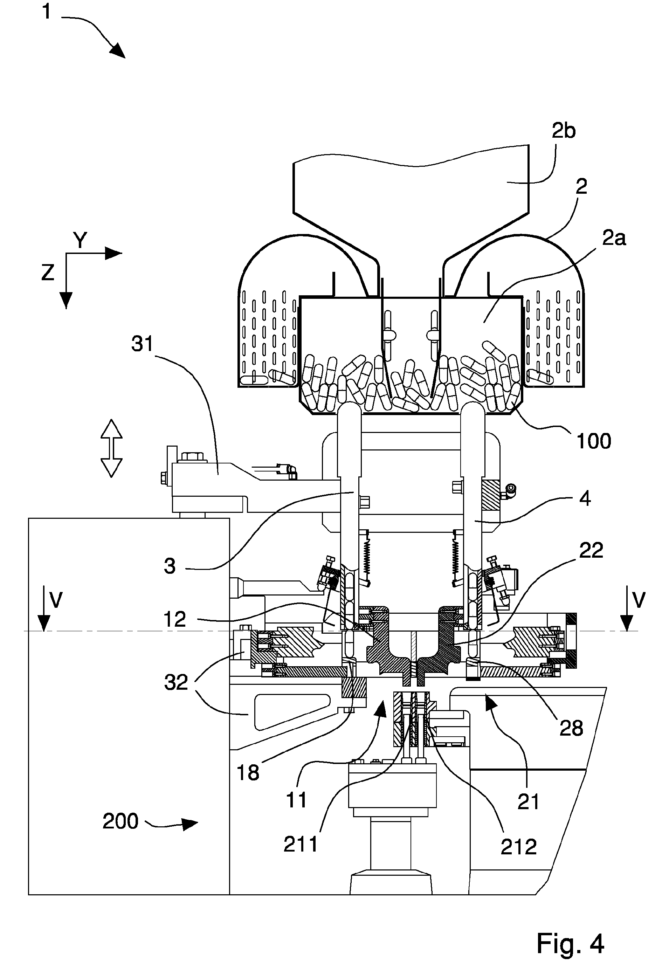

The operation of the apparatus 1 provides in a first operating step (figure 4) for the descent of both feeding conduits 3, 4 (moved by the first actuating means 31) and the opening of the first stopping means 7 and of the second stopping means 8 to enable a single capsule 100 per feeding conduit 3, 4 to descend (pushed by the capsules overhead) into the corresponding orienting conduit 5, 6 underneath. Inside each first orienting conduit 5 and second orienting conduit 6 the capsule 100 is supported and kept upright by first supporting means 18 and second supporting means 28. In this step, the first horizontal pushing means 11 and vertical pushing means 12 and the second horizontal pushing means 21 and vertical pushing means 22 are in respective non-operating positions spaced away from the capsules 100.

In a second operating step (figure 6) the first horizontal pushing means 11 and the second horizontal pushing means 21 are moved along the second direction Y in opposite directions and moving towards one another so as to push and rotate (respectively with the first abutting means 13 and with the second abutting means 23) the respective capsules 100 in a substantially horizontal position.

In a third operating step (figure 7) whilst the first horizontal pushing means 11 and the second horizontal pushing means 21 are brought back to the respective non-operating positions, the first vertical pushing means 12 and the second vertical pushing means 22 are moved along the third direction Z (downwards) to respective operating positions so as to rotate the respective capsules 100 in a suhstantially vertical position, with the bottoms 100b facing downwards. It should be noted that this third operating step coincides with the first operating step for the capsules arranged in the feeding conduits upstream of the capsules that have been oriented.

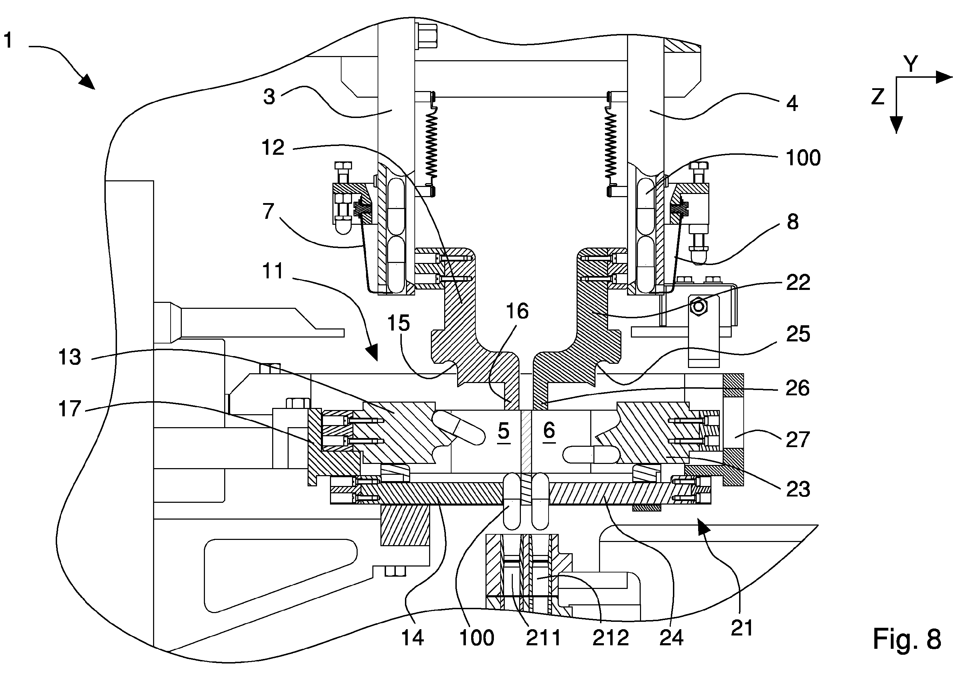

In a fourth operating step (figure 8), the first horizontal pushing means 11 and the second horizontal pushing means 21 are moved along the second direction Y in opposite directions towards one another in the respective operating positions so as to push, respectively with the third abutting means 14 and with the fourth abutting means 24, and move the capsules 100 coming from the first feeding conduits 3 near to the capsules 100 coming from the second feeding conduits 4. This fourth operating step coincides with the second operating step of the capsules arranged in the feeding conduits upstream of the capsules that have just been moved towards one another.

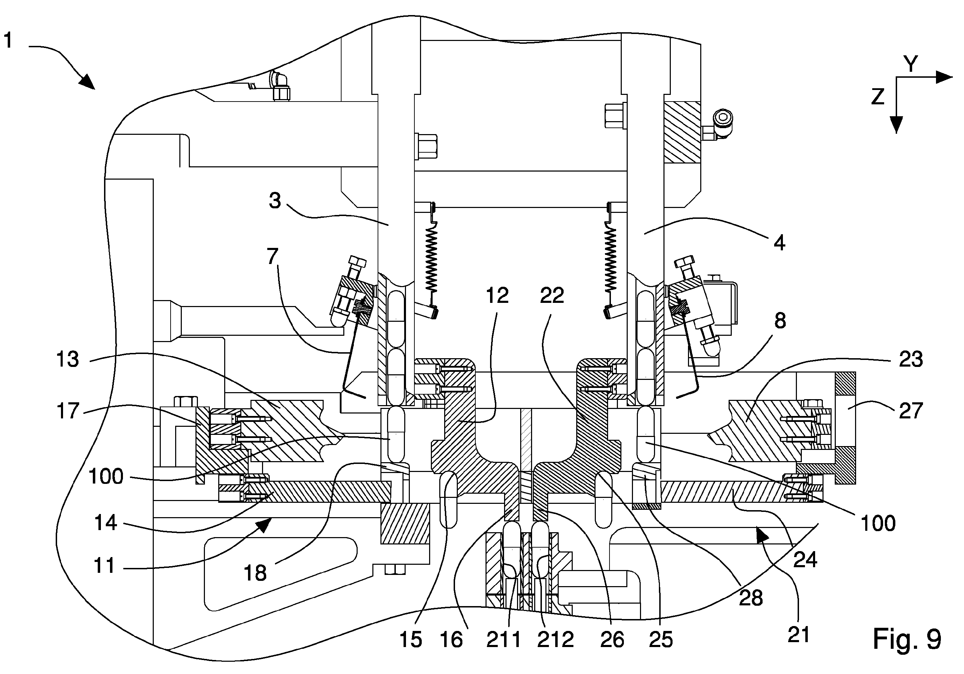

In a fifth operating step (figure 9) whilst the first horizontal pushing means 11 and the second horizontal pushing means 21 are brought back to the respective non operating positions, the first vertical pushing means 12 and the second vertical pushing means 22 are moved along the third direction Z (downwards) so as to push, respectively with the further third abutting means 16 and the further fourth abutting means 26, the respective capsules 100 inside the first seats 211 and the second seats 212. This fifth operating step coincides with the first operating step of capsules descending into the orienting conduits from the feeding conduits.

Owing to the apparatus 1 of the invention, it is thus possible to feed with precision and reliability a high-production filling machine provided with seats for the capsules arranged alongside one another according to two adjacent rows. The apparatus is not very bulky and can be easily arranged above the transferring wheel, to enable operating stations to be positioned adjacent one another.

## Claims

1. Apparatus for feeding capsules (**100**) to a transferring wheel (**210**) of a filling machine (**200**), including:
- a store (**2**) for containing said capsules (**100**);
- first feeding conduits (**3**), spaced apart along a first direction (**X**), for drawing said capsules (**100**) from said store (**2**) and conveying said capsules (**100**) towards first seats (**211**) of said transferring wheel (**210**);
- second feeding conduits (**4**), spaced apart along said first direction (**X**) and spaced apart from said first feeding conduits (**3**) along a second direction (**Y**) substantially orthogonal to said first direction (**X**), for drawing said capsules (**100**) from said store (**2**) and conveying said capsules (**100**) towards second seats (**212**) of said transferring wheel (**210**);
- first horizontal pushing means (**11**) and first vertical pushing means (**12**), both being movable and arranged for receiving and orienting the capsules (**100**) corning from said first feeding conduits (**3**);
- second horizontal pushing means (**21**) and second vertical pushing means (**22**), both being movable and arranged for receiving and orienting the capsules (**100**) coming from said second feeding conduits (**4**);
said first horizontal pushing means (**11**) and said second horizontal pushing means (**21**) being opposite to one another and movable with alternating motion along said second direction (**Y**), said first horizontal pushing means (**11**) being movable in an opposite direction with respect to said second horizontal pushing means (**21**) so as to orient, move close along said second direction (**Y**) and insert, in cooperation with said first vertical pushing means (**12**) and said second vertical pushing means (**22**), the capsules (**100**) coming from said first feeding conduits (**3**) and the capsules (**100**) coming from said second feeding conduits (**4**) in said first seats (**211**) and in said second seats (**212**), respectively.

2. Apparatus according to claim 1, wherein said first vertical pushing means (**12**) and said second vertical pushing means (**22**) are arranged alongside one another, substantially parallel and movable with alternating motion along a third direction (**Z**), in particular substantially orthogonal to said first direction (**X**) and said second direction (**Y**).

3. Apparatus according to any one of the preceding claims, including first orienting conduits (**5**), arranged alongside one another and parallel to the first direction (**X**) and interposed between the first feeding conduits (**3**) and the first seats (**211**), and second orienting conduits (**6**), arranged alongside one another and parallel to the first direction (**X**) and interposed between the second feeding conduits (**4**) and the second seats (**212**); said first orienting conduits (**5**) and said second orienting conduits (**6**) being arranged for receiving sail capsules (**100**) from the first feeding conduits (**3**) and the second feeding conduits (**4**), respectively, and being dimensioned to keep said capsules (**100**), including respective lids (**100a**) and bodies (**100b**), by means of interference fit with said lids (**100a**).

4. Apparatus according to claim 3, wherein said first horizontal pushing means (**11**) and said first vertical pushing means (**12**) are movable within said first orienting conduits (**5**) and include first abutting means (**13**) and further first abutting means (**15**), respectively, to push and rotate the capsules (**100**) in a substantially vertical position with respective bodies (**100b**) turned towards the first seats (**211**).

5. Apparatus according to any one of claims 3 and 4, wherein said second horizontal pushing means (**21**) and said second vertical pushing means (**22**) are movable within said second orienting conduits (**6**) and include second abutting means (**23**) and further second abutting means (**25**), respectively, to rotate the capsules (**100**) in a substantially vertical position with respective bodies (**100b**) turned towards the second seats (**212**).

6. Apparatus according to any one of claims 3 to 5, wherein said first horizontal pushing means (**11**) and said second horizontal pushing means (**21**) include third abutting means (**14**) and fourth abutting means (**24**), respectively, to push and move close along said second direction (**Y**) the capsules (**100**) corning from the first feeding conduits (**3**) and the capsules (**100**) corning from the second feeding conduits (**4**), so as to align said capsules (**100**) on the first seats (**211**) and on the second seats (**212**), respectively.

7. Apparatus according to claim 6, wherein said first vertical pushing means (**12**) and said second vertical pushing means (**22**) include further third abutting means (**16**) and further fourth abutting means (**26**), respectively, to push the capsules (**100**), once moved close by means of the third abutting means (**14**) and the fourth abutting means (**24**), within the first seats (**211**) and the second seats (**212**), respectively.

8. Apparatus according to any one of the preceding claims, wherein said first feeding conduits (**3**) and said second feeding conduits (**4**) extend along a third direction (**Z**), in particular substantially orthogonal to said first direction (**X**) and said second direction (**Y**), and are moved with alternating motion along said third direction (**Z**) by means of first drive means (**31**), so as to draw capsules (**100**) from said store (**2**).

9. Apparatus according to any one of the preceding claims, wherein said first vertical pushing means (**12**) is fixed to said first feeding conduits (**3**) and said second vertical pushing means (**22**) is fixed to said second feeding conduits (**4**).

10. Apparatus according to any one of the preceding claims, including second drive means (**32**) for moving said first horizontal pushing means (**11**) and said second horizontal pushing means (**21**) along said second direction (**Y**) onto a substantially horizontal plane with alternating motion and opposite directions.

11. Machine for filling capsules (**100**) with at least one product, in particular pharmaceutical product, including a feeding station provided with an apparatus (**1**) according to any one of the preceding claims.

## Patentansprüche

1. Vorrichtung zum Zuführen von Kapseln (100) in ein Übertragungsrad (210) einer Befüllmaschine (200), umfassend:
- einen Vorrat (2) zum Enthalten der Kapseln (100);
- erste Zuführkanäle (3), die entlang einer ersten Richtung (X) beabstandet sind, zum Abziehen der Kapseln (100) von dem Vorrat (2) und zum Befördern der Kapseln (100) zu ersten Aufnahmen (211) des Übertragungsrads (210);
- zweite Zuführkanäle (4), die entlang der ersten Richtung (X) beabstandet und von den ersten Zuführkanälen (3) entlang einer zweiten Richtung (Y) beabstandet sind, die im Wesentlich orthogonal zu der ersten Richtung (X) ist, zum Abziehen der Kapseln (100) von dem Vorrat (2) und zum Befördern der Kapseln (100) zu zweiten Aufnahmen (212) des Übertragungsrads (210);
- erste horizontale Stoßmittel (11) und erste vertikale Stoßmittel (12), die beide beweglich und zum Aufnehmen und Orientieren der Kapseln (100), die von den ersten Zuführkanälen (3) kommen, angeordnet sind;
- zweite horizontale Stoßmittel (21) und zweite vertikale Stoßmittel (22), die beide beweglich und zum Aufnehmen und Orientieren der Kapseln (100), die von den zweiten Zuführkanälen (4) kommen, angeordnet sind;
wobei die ersten horizontalen Stoßmittel (11) und die zweiten horizontalen Stoßmittel (21) zueinander entgegengesetzt sind und mit alternierender Bewegung entlang der zweiten Richtung (Y) beweglich sind, wobei die ersten horizontalen Stoßmittel (11) in einer entgegengesetzten Richtung bezüglich der zweiten horizontalen Stoßmittel (21) beweglich sind, um so die Kapseln (100), die von den ersten Zuführkanälen (3) kommen, und die Kapseln (100), die von den zweiten Zuführkanälen (4) kommen, in Zusammenwirken mit den ersten vertikalen Stoßmitteln (12) und den zweiten vertikalen Stoßmitteln (22) zu orientieren, entlang der zweiten Richtung (Y) heranzubewegen und in die ersten Aufnahmen (211) bzw. in die zweiten Aufnahmen (212) einzusetzen.

2. Vorrichtung nach Anspruch 1, wobei die ersten vertikalen Stoßmittel (12) und die zweiten vertikalen Stoßmittel (22) längsseits zueinander angeordnet, im Wesentlichen parallel und mit alternierender Bewegung entlang einer dritten Richtung (Z) beweglich sind, die im Wesentlichen orthogonal zu der ersten Richtung (X) und der zweiten Richtung (Y) ist.

3. Vorrichtung nach einem der vorhergehenden Ansprüche, umfassend erste Orientierungskanäle (5), die längsseits zueinander und parallel zur ersten Richtung (X) angeordnet und zwischen den ersten Zuführkanälen (3) und den ersten Aufnahmen (211) angeordnet sind, und zweite Orientierungskanäle (6), die längsseits zueinander und parallel zur ersten Richtung (X) angeordnet und zwischen den zweiten Zuführkanälen (4) und den zweiten Aufnahmen (212) angeordnet sind; wobei die ersten Orientierungskanäle (5) und die zweiten Orientierungskanäle (6) zum Aufnehmen der Kapseln (100) von den ersten Zuführkanälen (3) bzw. den zweiten Zuführkanälen (4) angeordnet und dimensioniert sind, um die Kapseln (100), einschließlich jeweiliger Deckel (100a) und Körper (100b), mittels Presspassung mit den Deckeln (100a) zu halten.

4. Vorrichtung nach Anspruch 3, wobei die ersten horizontalen Stoßmittel (11) und die ersten vertikalen Stoßmittel (12) innerhalb der ersten Orientierungskanäle (5) beweglich sind und erste Anlagemittel (13) bzw. weitere erste Anlagemittel (15) umfassen, um die Kapseln (100) in eine im Wesentlichen vertikale Position, mit den jeweiligen Körpern (100b) zu den ersten Aufnahmen (211) hin gewandt, zu stoßen und zu drehen.

5. Vorrichtung nach einem der Ansprüche 3 und 4, wobei die zweiten horizontalen Stoßmittel (21) und die zweiten vertikalen Stoßmittel (22) innerhalb der zweiten Orientierungskanäle (6) beweglich sind und zweite Anlagemittel (23) bzw. weitere zweite Anlagemittel (25) umfassen, um die Kapseln (100) in eine im Wesentlichen vertikale Position, mit den jeweiligen Körpern (100b) zu den zweiten Aufnahmen (212) hin gewandt, zu drehen.

6. Vorrichtung nach einem der Ansprüche 3 bis 5, wobei die ersten horizontalen Stoßmittel (11) und die zweiten horizontalen Stoßmittel (21) dritte Anlagemittel (14) bzw. vierte Anlagemittel (24) umfassen, um die Kapseln (100), die von den ersten Zuführkanälen (3) kommen, und die Kapseln (100), die von den zweiten Zuführkanälen (4) kommen, zu stoßen und entlang der zweiten Richtung (Y) heranzubewegen, um so die Kapseln (100) jeweils auf die ersten Aufnahmen (211) und die zweiten Aufnahmen (212) auszurichten.

7. Vorrichtung nach Anspruch 6, wobei die ersten vertikalen Stoßmittel (12) und die zweiten vertikalen Stoßmittel (22) weitere dritte Anlagemittel (16) bzw. weitere vierte Anlagemittel (26) umfassen, um die Kapseln (100), sobald diese mittels der dritten Anlagemittel (14) und der vierten Anlagemittel (24) heranbewegt wurden, in die ersten Aufnahmen (211) und die zweiten Aufnahmen (212) zu stoßen.

8. Vorrichtung nach einem der vorhergehenden Ansprüche, wobei die ersten Zuführkanäle (3) und die zweiten Zuführkanäle (4) sich entlang einer dritten Richtung (Z) erstrecken, die im Wesentlichen orthogonal zu der ersten Richtung (X) und zu der zweiten Richtung (Y) ist, und mit alternierender Bewegung entlang der dritten Richtung (Z) mittels erster Antriebsmittel (31) bewegt werden, um so die Kapseln (100) von dem Vorrat (2) abzuziehen.

9. Vorrichtung nach einem der vorhergehenden Ansprüche, wobei die ersten vertikalen Stoßmittel (12) an den ersten Zuführkanälen (3) festgelegt und die zweiten vertikalen Stoßmittel (22) an den zweiten Zuführkanälen (4) festgelegt sind.

10. Vorrichtung nach einem der vorhergehenden Ansprüche, umfassend zweite Antriebsmittel (32) zum Bewegen der ersten horizontalen Stoßmittel (11) und der zweiten horizontalen Stoßmittel (21) entlang der zweiten Richtung (Y) auf eine im Wesentlichen horizontale Ebene mit alternierender Bewegung und entgegengesetzten Richtungen.

11. Maschine zum Befüllen von Kapseln (100) mit zumindest einem Produkt, insbesondere einem pharmazeutischen Produkt, umfassend eine Zuführstation, die mit einer Vorrichtung (1) nach einem der vorhergehenden Ansprüche ausgestattet ist.

## Revendications

1. Appareil pour l'alimentation en gélules (**100**) d'une roue de transfert (**210**) d'une machine de remplissage (**200**), comprenant :
- un dispositif d'entreposage (**2**) destiné à contenir lesdites gélules (**100**);
- des premières conduites d'alimentation (**3**), espacées les unes des autres selon une première direction (**X**), destinées à attirer lesdites gélules (**100**) dudit dispositif d'entreposage (**2**) et acheminer lesdites gélules (**100**) vers des premiers sièges (**211**) de ladite roue de transfert (**210**);
- des secondes conduites d'alimentation (**4**), espacées les unes des autres selon ladite première direction (**X**) et espacées desdites premières conduites d'alimentation (**3**) selon une deuxième direction (**Y**) sensiblement orthogonale à ladite première direction (**X**), destinées à attirer lesdites gélules (**100**) dudit dispositif d'entreposage (**2**) et acheminer lesdites gélules (**100**) vers des seconds sièges (**212**) de ladite roue de transfert (**210**);
- des premiers moyens de poussée horizontale (**11**) et des premiers moyens de poussée verticale (**12**), les deux étant mobiles et agencés pour recevoir et orienter les gélules (**100**) provenant desdites premières conduites d'alimentation (**3**);
- des seconds moyens de poussée horizontale (**21**) et des seconds moyens de poussée verticale (**22**), les deux étant mobiles et agencés pour recevoir et orienter les gélules (**100**) provenant desdites secondes conduites d'alimentation (**4**);
lesdits premiers moyens de poussée horizontale (**11**) et lesdits seconds moyens de poussée horizontale (**21**) étant en regard les uns des autres et mobiles d'un mouvement alternatif selon ladite deuxième direction (**Y**), lesdits premiers moyens de poussée horizontale (**11**) étant mobiles dans un sens opposé par rapport auxdits seconds moyens de poussée horizontale (**21**) afin d'orienter, rapprocher selon ladite deuxième direction (**Y**) et insérer, en coopération avec lesdits premiers moyens de poussée verticale (**12**) et lesdits seconds moyens de poussée verticale (**22**), les gélules (**100**) provenant desdites premières conduites d'alimentation (**3**) et les gélules (**100**) provenant desdites secondes conduites d'alimentation (**4**) dans lesdits premiers sièges (**211**) et dans lesdits seconds sièges (**212**), respectivement.

2. Appareil selon la revendication 1, dans lequel lesdits premiers moyens de poussée verticale (**12**) et lesdits seconds moyens de poussée verticale (**22**) sont agencés les uns à côté des autres, sensiblement parallèles et mobiles d'un mouvement alternatif selon une troisème direction (**Z**), notamment sensiblement orthogonale à ladite première direction (**X**) et ladite deuxième direction (**Y**).

3. Appareil selon l'une quelconque des revendications précédentes, comprenant des premières conduites d'orientation (**5**), agencées les unes à côté des autres et parallèles à la première direction (**X**) et interposées entre les premières conduites d'alimentation (**3**) et les premiers sièges (**211**), et des secondes conduites d'orientation (**6**), agencées les unes à côté des autres et parallèles à la première direction (**X**) et interposées entre les secondes conduites d'alimentation (**4**) et les seconds sièges (**212**); lesdites premières conduites d'orientation (**5**) et lesdites secondes conduites d'orientation (**6**) étant agencées pour recevoir lesdites gélules (**100**) des premières conduites d'alimentation (**3**) et des secondes conduites d'alimentation (**4**), respectivement, et étant dimensionnées pour retenir lesdites gélules (**100**), comprenant les têtes (**100a**) et les corps (**100b**) respectifs, par ajustement serré avec lesdites têtes (**100a**).

4. Appareil selon la revendication 3, dans lequel lesdits premiers moyens de poussée horizontale (**11**) et lesdits premiers moyens de poussée verticale (**12**) sont mobiles à l'intérieur desdites premières conduites d'orientation (**5**) et comprennent des premiers moyens de butée (**13**) et d'autres premiers moyens de butée (**15**), respectivement, pour pousser et faire tourner les gélules (**100**) dans une position sensiblement verticale avec les corps respectifs (**100b**) orientés vers les premiers sièges (**211**).

5. Appareil selon l'une quelconque des revendications 3 et 4, dans lequel lesdits seconds moyens de poussée horizontale (**21**) et lesdits seconds moyens de poussée verticale (**22**) sont mobiles à l'intérieur desdites secondes conduites d'orientation (**6**) et comprennent des seconds moyens de butée (**23**) et d'autres seconds moyens de butée (**25**), respectivement, pour faire tourner les gélules (**100**) dans une position sensiblement verticale avec les corps respectifs (**100b**) orientés vers les seconds sièges (**212**).

6. Appareil selon l'une quelconque des revendications 3 à 5, dans lequel lesdits premiers moyens de poussée horizontale (**11**) et lesdits seconds moyens de poussée horizontale (**21**) comprennent des troisièmes moyens de butée (**14**) et des quatrièmes moyens de butée (**24**), respectivement, pour pousser et rapprocher selon ladite deuxième direction (**Y**) les gélules (**100**) provenant des premières conduites d'alimentation (**3**) et les gélules (**100**) provenant des secondes conduites d'alimentation (**4**), afin d'aligner lesdites gélules (**100**) sur les premiers sièges (**211**) et sur les seconds sièges (**212**), respectivement.

7. Appareil selon la revendication 6, dans lequel lesdits premiers moyens de poussée verticale (**12**) et lesdits seconds moyens de poussée verticale (**22**) comprennent d'autres troisièmes moyens de butée (**16**) et d'autres quatrièmes moyens de butée (**26**), respectivement, pour pousser les gélules (**100**), une fois rapprochées au moyen des troisièmes moyens de butée (**14**) et des quatrièmes moyens de butée (**24**), vers l'intérieur des premiers sièges (**211**) et des seconds sièges (**212**), respectivement.

8. Appareil selon l'une quelconque des revendications précédentes, dans lequel lesdites premières conduites d'alimentation (**3**) et lesdites secondes conduites d'alimentation (**4**) s'étendent selon une troisème direction (**Z**), notamment sensiblement orthogonale à ladite première direction (**X**) et ladite deuxième direction (**Y**), et sont animées d'un mouvement alternatif selon ladite troisième direction (**Z**) au moyen de premiers moyens d'entraînement (**31**), afin d'attirer des gélules (**100**) dudit dispositif d'entreposage (**2**).

9. Appareil selon l'une quelconque des revendications précédentes, dans lequel lesdits premiers moyens de poussée verticale (**12**) sont fixés auxdites premières conduites d'alimentation (**3**) et lesdits seconds moyens de poussée verticale (**22**) sont fixés auxdites secondes conduites d'alimentation (**4**).

10. Appareil selon l'une quelconque des revendications précédentes, comprenant des seconds moyens d'entraînement (**32**) pour animer lesdits premiers moyens de poussée horizontale (**11**) et lesdits seconds moyens de poussée horizontale (**21**) selon ladite deuxième direction (**Y**) sur un plan sensiblement horizontal d'un mouvement alternatif et dans des sens opposés.

11. Machine de remplissage de gélules (**100**) avec au moins un produit, notamment un produit pharmaceutique, comprenant un poste d'alimentation pourvu d'un appareil (**1**) selon l'une quelconque des revendications précédentes.
